# EUROPÄISCHE PATENTSCHRIFT

(11) **EP 2 420 417 B1**
(45) Veröffentlichungstag und Bekanntmachung des Hinweises auf die Patenterteilung: **22.04.2015**
(21) Anmeldenummer: 11450102.6
(22) Anmeldetag: 11.08.2011
(51) Int. Cl.: B60S 5/02

(54) **Mobile Tankstelle**
Mobile petrol station
Station service mobile

(30) Priorität: 16.08.2010 AT 13712010
(43) Veröffentlichungstag der Anmeldung: 22.02.2012
(73) Patentinhaber: Tulzer, Alexander, 1210 Wien (AT); Schneemayer, Werner, 1140 Wien (AT)
(72) Erfinder: Tulzer, Alexander, 1210 Wien (AT); Schneemayer, Werner, 1140 Wien (AT)
(74) Vertreter: Keschmann, Marc

(56) Entgegenhaltungen:
- WO-A1-98/01330
- DE-A1- 10 118 169
- FR-A1- 2 923 813

## Beschreibung

Die Erfindung betrifft eine mobile Tankstelle für Kraftfahrzeuge mit wenigstens einer an einen Kraftstofftank angeschlossenen Zapfsäule, einem Fahrbahnelement und wenigstens einer in das Fahrbahnelement integrierten Auffangwanne für verschütteten Kraftstoff oder kontaminierte Flüssigkeiten.

Eine derartige mobile Tankstelle ist beispielsweise der DE 101 18 169 A1 zu entnehmen.

Wie dieser Literaturstelle zu entnehmen ist, muss der Boden einer Tankstelle so beschaffen sein, dass auslaufende wassergefährdende Flüssigkeiten, wie insbesondere Kraftstoff, erkannt und beseitigt werden können und nicht in ein oberirdisches Gewässer oder in das Erdreich gelangen können. Die Bodenfläche muss daher ausreichend dicht und widerstandsfähig gegen wassergefährdende Flüssigkeiten sowie gegen die zu erwartenden mechanischen Beanspruchungen sein. Diese Anforderungen gelten beispielsweise als erfüllt, wenn die Tankstelle durch Gefällegrenzen, Einlaufrinnen oder Aufkantungen begrenzt ist und die Bodenflächen strengen Sicherheitsvorschriften hinsichtlich der Materialstärke, Materialqualität (z.B. Stahlbeton der Mindestgüte B 35) gerecht werden. Die Bodenflächen sind durch den Betreiber regelmäßig auf sichtbare Schäden zu kontrollieren. Die Flächen unterhalb der Tankstellen müssen so ausgebildet sein, dass Kraftstoffe nicht in den Untergrund gelangen können.

Durch geeignete Maßnahmen muss weiters verhindert werden, dass verunreinigtes Niederschlagswasser in den Boden oder in ein Gewässer gelangt. Dies ist z.B. dann erfüllt, wenn im Wirkbereich der Tankstelle die Abläufe mit Abscheider mit selbsttätigem Abschluss ausgerüstet sind. Bei mobilen Tankstellen entfällt die Notwendigkeit von aufwändigen Bodenversiegelungen mit Abwässerungssystemen, wenn, wie dies beispielsweise der DE 101 18 169 A1 entnommen werden kann, ein mobiles Fahrbahnelement vorgesehen ist, welches eine integrierte Auffangwanne für verschütteten Kraftstoff oder kontaminierte Flüssigkeiten aufweist. Das Fahrbahnelement mit integrierter Auffangwanne gewährleistet den Bodenschutz im Falle einer Leckage oder fehlerhaften Bedienhandlungen, indem das geförderte Produkt über eine Ablaufrinne in die Auffangwanne des Fahrbahnelements geleitet wird. Mit dieser Konstruktion ist sichergestellt, dass Belastungen des Bodens oder des Grundwassers durch unkontrolliertes Ablaufen von belastetem Oberflächenwasser aus dem Abfüllbereich nicht zu befürchten ist.

Nachteilig an einer mobilen Tankstelle mit einem derartigen gesonderten Fahrbahnelement ist jedoch, dass die Mobilität aufgrund der Notwendigkeit, das Fahrbahnelement bei jedem Ortswechsel der Tankstelle entsprechend mitzutransportieren, erheblich eingeschränkt wird. Ein Ortswechsel erfordert nicht nur die Verladung und den Transport des Kraftstofftanks und der an diesen angeschlossenen Zapfsäulen, sondern ebenso die entsprechend aufwändige Manipulation und den Transport des relativ sperrigen Fahrbahnelements.

Die Erfindung zielt daher darauf ab, eine mobile Tankstelle dahingehend zu verbessern, dass der Transport der Tankstelle unter Einhaltung der umweltrelevanten Rahmenbedingungen vereinfacht wird. Weiters soll die mobile Tankstelle in einfacher Art und Weise in ihrer Größe und Ausstattung an die jeweiligen örtlichen Gegebenheiten und Bedürfnisse angepasst werden können, wobei insbesondere auch eine nachträgliche Veränderung der Kapazität und insbesondere der Anzahl der Zapfsäulen der mobilen Tankstelle in einfacher Weise möglich sein soll.

Zur Lösung dieser Aufgabe ist die mobile Tankstelle der eingangs genannten Art im Wesentlichen dadurch gekennzeichnet, dass die mobile Tankstelle von wenigstens einem Container als raumbildendem Modul gebildet ist, der von dem zu betankenden Fahrzeug durchfahrbar ist, wobei der Boden des Containers das Fahrbahnelement trägt oder aufweist und die Dachwand des Containers die Überdachung der Tankstelle bildet und wobei die wenigstens eine Zapfsäule in dem Container angeordnet ist. Dadurch, dass die mobile Tankstelle von wenigstens einem Container als raumbildendem Modul gebildet ist, können alle wesentlichen strukturellen Bestandteile der Tankstelle und insbesondere das Fahrbahnelement und die Zapfsäulen gemeinsam als Modul bereitgestellt werden, das mit Hilfe von für derartige Container als Standardtransportmittel existierenden Lastkraftwagen oder dgl. von einem Aufstellungsort zum nächsten Aufstellungsort transportiert werden kann. Derartige im Rahmen der Erfindung zum Einsatz gelangende Container sind im Bereich des Warentransportes hinlänglich bekannt und weisen meist Standardaußenmaße auf, wobei derartige Container überaus stabil und robust ausgebildet sind und aufgrund der standardisierten Außenabmessung in einfacher Weise transportiert werden können. Dadurch, dass nun erfindungsgemäß ein derartiger Container als raumbildendes Modul einer mobilen Tankstelle mit einem integrierten Fahrbahnelement und wenigstens einer Zapfsäule verwendet wird, ist es für das Bereitstellen einer mobilen Tankstelle lediglich erforderlich, den Container am gewünschten Aufstellungsort mit Hilfe geeigneter Transport- und Absetzvorrichtungen aufzustellen, wobei am Untergrund keine besonderen Anforderungen im Zusammenhang mit der Erfüllung von umweltrelevanten Vorschriften zu beachten sind.

Aufgrund der Containerbauweise ist es auch in einfacher Weise möglich, mehrere Container modulweise zusammenzustellen, und es ist in diesem Zusammenhang die Erfindung bevorzugt derart weitergebildet, dass die Tankstelle aus wenigstens zwei, vorzugsweise drei Containern mit gleichen Außenabmessungen aufgebaut ist. Zum Beispiel ist es in diesem Zusammenhang denkbar, dass zwei Container mit ihren längeren Seiten aneinander gestellt sind und die Container quer zur längeren Seite hintereinander stufenlos durchfahrbar sind, sodass der eine Container die Tankstelleinfahrt und der andere Container die Tankstellenausfahrt aufweist.

Wenn wenigstens zwei Container mit ihren längeren Seiten aneinander gestellt sind, entsteht mit Rücksicht auf die Längserstreckung derartiger Standardcontainer eine mobile Tankstelle mit einer entsprechenden Längsausdehnung, sodass die Tankstelle gleichzeitig von zwei nebeneinander stehenden Fahrzeugen verwendet werden kann. Die Ausbildung ist in diesem Zusammenhang bevorzugt derart getroffen, dass die Zapfsäule im Wesentlichen in der Mitte der Längserstreckung des Containers angeordnet ist, sodass die Tankstelle zu beiden Seiten der Zapfsäule durchfahrbar ist.

Im Rahmen der Erfindung kann auf handelsübliche Transportcontainer zurückgegriffen werden, die lediglich geringfügig umgebaut werden müssen, um das Fahrbahnelement integrieren zu können und um alle für die Betankung von Fahrzeugen erforderlichen Bauteile aufnehmen zu können. Bevorzugt ist dabei vorgesehen, dass der wenigstens eine Container als Standard-Container, wie z.B. ISO-Container, bevorzugt als 20', 30' oder 40' ISO-Container, ausgebildet ist.

In wenigstens einem Fahrbahnelement ist, wie bereits erwähnt, erfindungsgemäß wenigstens eine integrierte Auffangwanne für verschütteten Kraftstoff oder kontaminierte Flüssigkeiten vorgesehen. In diesem Zusammenhang sieht eine bevorzugte Weiterbildung vor, dass wenigstens zwei Auffangwannen vorgesehen sind, die sich quer zur Befahrrichtung der Tankstelle über die gesamte Länge des Containers erstrecken, wobei die eine Auffangwanne der Tankstelleneinfahrt und die andere Auffangwanne der Tankstellenausfahrt benachbart angeordnet ist. Aufgrund der Anordnung einer Auffangwanne bei der Tankstelleneinfahrt und einer weiteren Auffangwanne bei der Tankstellenausfahrt wird wirksam verhindert, dass umweltschädigende Substanzen aus dem Container austreten und damit gleichzeitig sichergestellt, dass die jeweiligen umweltrelevanten Vorschriften eingehalten werden.

Die Ausbildung ist dabei bevorzugt derart getroffen, dass die Fahrbahnoberfläche des Fahrbahnelements in Richtung zur Auffangwanne abwärts geneigt ist.

Um zu vermeiden, dass die wenigstens eine Auffangwanne überläuft, wenn beispielsweise aufgrund von Regenwasser entsprechend große Mengen verschmutzten Wassers in die Auffangwanne gelangen, ist mit Vorteil vorgesehen, dass in dem wenigstens einen Container ein Lagerbehälter für in der wenigstens einen Auffangwanne gesammelten verschütteten Kraftstoff oder kontaminierte Flüssigkeiten angeordnet ist und dass eine Pumpe zum Absaugen des gesammelten verschütteten Kraftstoffs oder der kontaminierten Flüssigkeiten aus der wenigstens einen Auffangwanne in den Lagerbehälter vorgesehen ist. Das Schmutzwasser kann dabei in geeigneter Weise aufbereitet werden oder kann ohne weitere Behandlung im Lagerbehälter verbleiben, wobei dafür Sorge getragen werden muss, dass der Lagerbehälter in regelmäßigen Abständen wiederum entleert wird, wofür der Lagerbehälter entsprechende Anschlüsse aufweist.

Die Anordnung des Kraftstoffvorrattanks könnte prinzipiell ebenfalls in dem erwähnten wenigstens einen Container angeordnet werden. Dabei könnten aber lediglich entsprechend kleine Kraftstoffmengen vorrätig gehalten werden. Eine bevorzugte Weiterbildung sieht daher vor, dass der Kraftstofftank in einem gesonderten Container angeordnet ist. Insbesondere wenn es sich bei dem gesonderten Container um einen Container handelt, der im Wesentlichen die gleichen Außenabmessungen aufweist wie die übrigen für das Befahren durch die zu betankenden Fahrzeuge vorgesehenen Container, kann eine entsprechend große Kraftstoffmenge vorrätig gehalten werden. Außerdem trägt eine derartige Ausbildung dem Gedanken der Modulbauweise in besonderer Weise Rechnung, und es können somit tatsächlich sämtliche Komponenten einer mobilen Tankstelle durch Bereitstellen von Containern zur Verfügung gestellt werden.

Um eine geeignete Verbindung zwischen dem Kraftstofftank und der wenigstens einen Zapfsäule sicherzustellen, ist bevorzugt vorgesehen, dass die wenigstens eine Zapfsäule über wenigstens eine Kraftstoffzuleitung und ggf. eine Gasrückführungsleitung mit einem externen Kraftstofftank verbunden ist. Um bei einer derartigen Ausbildung die Möglichkeit zu schaffen, eine Mehrzahl von erfindungsgemäßen Containern in Modulbauweise zusammenzustellen, wobei dies insbesondere das nebeneinander Aufstellen einer Mehrzahl von Containern betrifft, um eine entsprechende Mehrzahl von Zapfsäulen zur Verfügung zu stellen, ist bevorzugt vorgesehen, dass sich die wenigstens eine Kraftstoffzuleitung und ggf. die Gasrückführungsleitung über die gesamte Länge des Containers erstrecken und an zwei gegenüberliegenden Wänden des Containers Anschlussflansche aufweisen. Die Kraftstoffzuleitungen und ggf. die Gasrückführungsleitung zweier benachbarter Container können auf diese Art und Weise miteinander verbunden werden, sodass sämtliche Zapfsäulen an einen einzigen Kraftstofftank angeschlossen werden können.

Eine besonders platzsparende Anordnung der Leitung ergibt sich gemäß einer bevorzugten Weiterbildung dadurch, dass die wenigstens eine Kraftstoffzuleitung und ggf. die Rückführungsleitung in der wenigstens einen Auffangwanne verläuft.

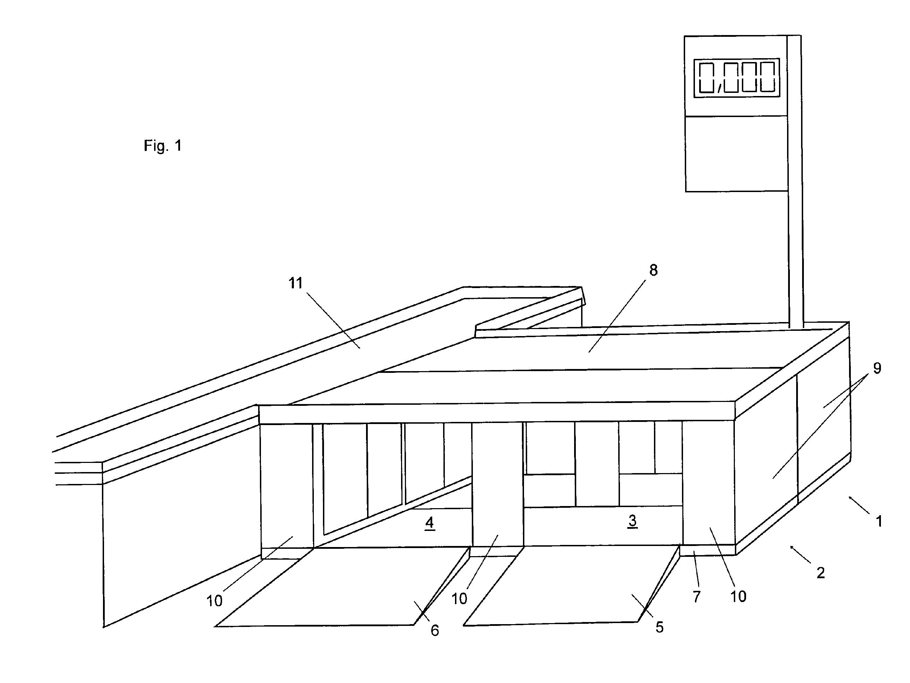

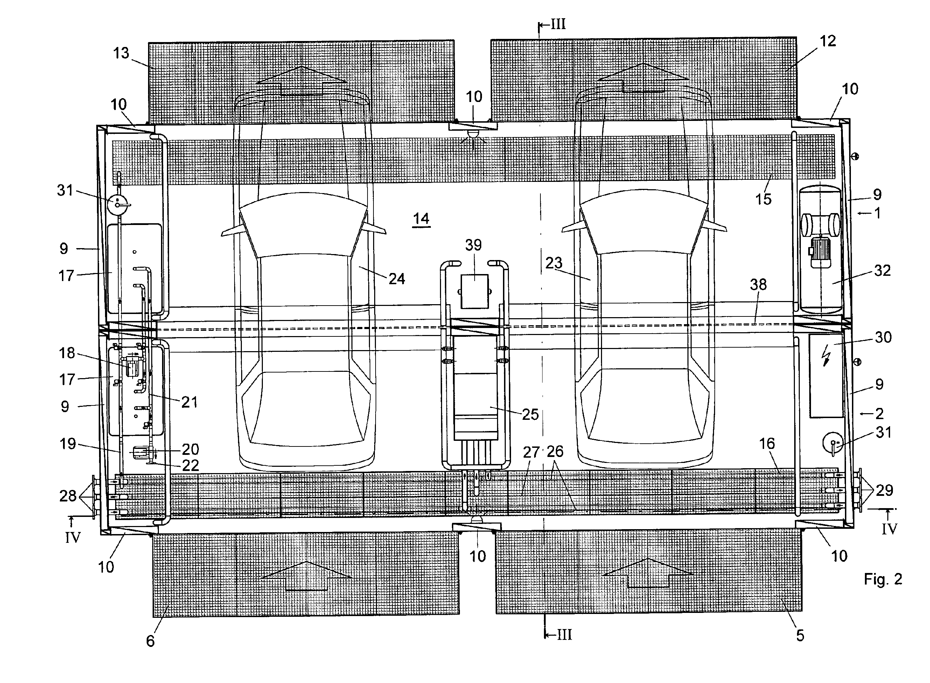

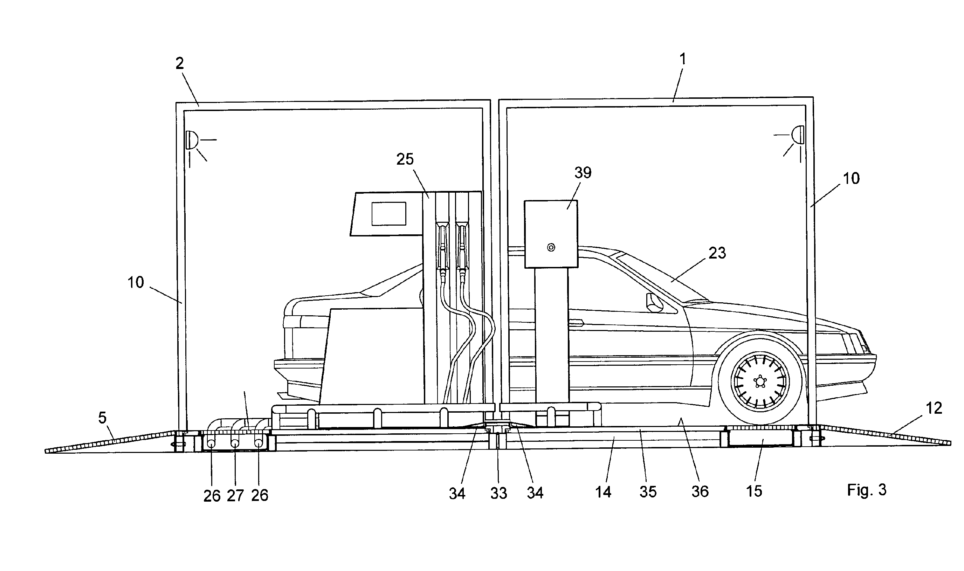

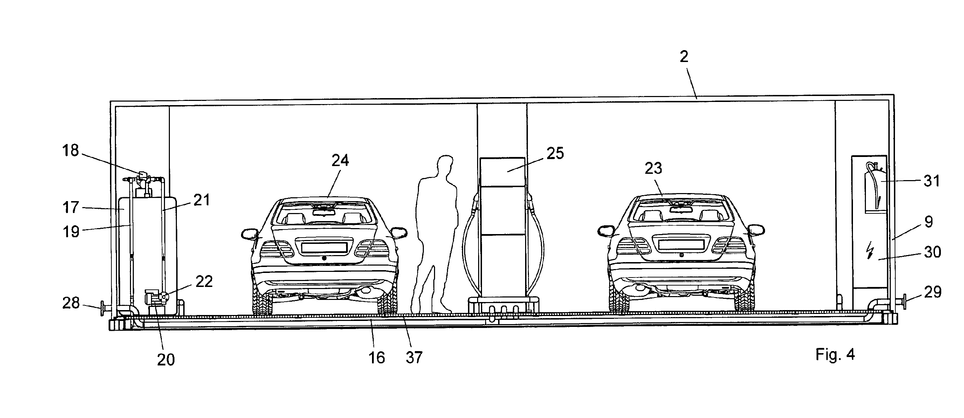

Die Erfindung wird nachfolgend anhand von schematisch in der Zeichnung dargestellten Ausführungsbeispielen näher erläutert. In dieser zeigen Fig. 1 eine perspektivische Darstellung der erfindungsgemäßen mobilen Tankstelle, Fig. 2 eine Draufsicht auf die Tankstelle, Fig. 3 eine Schnittansicht entlang der Linie III-III der Fig. 2 und Fig. 4 eine Schnittansicht entlang der Linie IV-IV der Fig. 2.

Die mobile Tankstelle gemäß Fig. 1 besteht aus zwei mit ihren Längsseiten aneinander stehenden Containern 1 und 2. Es handelt sich dabei beispielsweise um handelsübliche 30-Fuß ISO-Container, die im Rahmen der vorliegenden Erfindung entsprechend adaptiert wurden, um zwei Durchfahrten 3 und 4 für zu betankende Fahrzeuge zu schaffen. Zum leichteren Einfahren in die Tankstelle sind entsprechende Auffahrrampen 5 und 6 vorgesehen. Die Tankstellenausfahrt ist ebenfalls mit Rampen versehen, die in der Darstellung gemäß Fig. 1 nicht ersichtlich sind. Im Boden 7 der Container 1 und 2 sind Fahrbahnelemente integriert, wie dies aus den weiteren Figuren ersichtlich sein wird. In Fig. 1 ist lediglich die Containergrundstruktur dargestellt, und es ist beispielsweise ersichtlich, dass die Dachflächen der beiden Container 1 und 2 eine Tankstellenüberdachung 8 ausbilden. Die seitliche Begrenzung der Tankstelle erfolgt über die seitlichen Containerwände 9. An der Längsseite der Container 1 und 2 sind die Containerwände zur Schaffung der Durchfahrten 3 und 4 entsprechend aufgebrochen, sodass die Wandelemente 10 verbleiben.

Ein weiterer Container 11 ist quer zu den Containern 1 und 2 an diese herangestellt und beinhaltet den Kraftstoffvorratstank. Mit Ausnahme der Auffahrtsrampen 5 und 6 sowie der nicht dargestellten Abfahrtsrampen besteht die mobile Tankstelle somit ausschließlich aus Containern als raumbildende Module, wobei derartige Container in einfacher Art und Weise mit Hilfe von Lastkraftwagen transportiert werden können. Um auch die Auf- und Abfahrtsrampen zu integrieren, könnte aber auch vorgesehen sein, dass diese mit Hilfe einer Gelenkverbindung an den Containern festgelegt sind, sodass diese zum Zwecke des Transports der Container lediglich hochgeklappt werden müssten, wodurch die Durchfahren 3 und 4 für den Transport gleichzeitig verschlossen wären.

In der Draufsicht gemäß Fig. 2 ist ebenfalls die Zusammensetzung der mobilen Tankstelle aus den Containern 1 und 2 ersichtlich. Neben den Auffahrrampen 5 und 6 sind nun auch die Abfahrtsrampen 12 und 13 ersichtlich. In den Boden der Container 1 und 2 ist wenigstens ein Fahrbahnelement 14 integriert, in das wiederum zwei Auffangwannen 15 und 16 integriert sind. Das Fahrbahnelement 14 ist hierbei ausgehend von der Mittelebene 38 jeweils zur Auffangwanne 15 bzw. 16 abwärts geneigt, sodass verschütteter Kraftstoff und mit Kraftstoff kontaminiertes Regenwasser oder dgl. in die Auffangwannen 15 und 16 abfließen und dort gesammelt werden kann. Damit die Auffangwannen 15 und 16 nicht überlaufen, ist ein System zum Abpumpen des kontaminierten Wassers aus den Auffangwannen 15 und 16 vorgesehen. Die Container 1 und 2 weisen zu diesem Zweck Lagerbehälter 17 auf, in welche mit Hilfe einer Pumpe 8 und einer Leitung 19 kontaminiertes Wasser aus den Auffangwannen 15 und 16 gepumpt werden kann. Zum Entleeren der Lagerbehälter 17 ist eine weitere Pumpe 20 sowie eine Leitung 21 mit einem Anschlussflansch 22 vorgesehen.

Zum Betanken der schematisch dargestellten Fahrzeuge 23 und 24 ist eine Zapfsäule 25 vorgesehen, die mit einem Tankautomat 39 zusammenwirkt, sodass der Betankvorgang vollkommen ohne Bedienpersonal vonstatten gehen kann. Die Verbindung der Zapfsäule 25 mit dem in Fig. 2 nicht dargestellten Kraftstofftank erfolgt über zwei Saugleitungen 26 sowie eine Gasrückführungsleitung 27. Die Saugleitungen 26 sowie die Gasrückführungsleitung 27 erstrecken sich über die gesamte Länge des Containers und sind platzsparend in der Auffangwanne 16 angeordnet. Die Saugleitungen 26 und die Gasrückführungsleitung 27 weisen zu beiden Seiten des Containers entsprechende Anschlussflansche 28 und 29 auf. Über die Anschlussflansche 28 kann beispielsweise der Anschluss an den Kraftstoffvorratstank 11 erfolgen. Mit den Anschlussflanschen 29 können die entsprechenden Anschlussflansche eines benachbarten Containers verbunden werden, sodass die mobile Tankstelle entsprechend den jeweiligen örtlichen Gegebenheiten in ihrer Größe angepasst werden kann.

In Fig. 2 ist weiters ein Elektroschrank 30 sowie Feuerlöscher 31 dargestellt. Weiters ist ein Luftkompressor 32 vorgesehen. Alle für den Betrieb einer Tankstelle erforderlichen Bauteile sind somit in die erfindungsgemäß vorgesehenen Container integriert, sodass tatsächlich eine entsprechend kompakte und modulartig ausbaubare Bauweise entsteht, die entsprechend leicht transportiert werden kann.

In der Querschnittsansicht gemäß Fig. 3 ist ergänzend der Boden- bzw. Fahrbahnaufbau der mobilen Tankstelle ersichtlich. Das Fahrbahnelement 14 ist in den Boden der jeweiligen Container 1 und 2 integriert, wobei an der Stoßstelle 33 zwischen den beiden Containern 1 und 2 eine Abdichtung vorgesehen ist. Die Überbrückung der Stoßstelle erfolgt mit Hilfe von rampenartigen Fahrbahnelementen 34. Das Fahrbahnelement 14 weist einen Schichtholzboden 35 auf, der wiederum ein Tränenblech 36 trägt.

In der Schnittdarstellung gemäß Fig. 4 ist ersichtlich, dass die Auffangwanne 16 von einem Gitterrost 37 überdeckt ist, sodass die Auffangwannen entsprechend stufenlos überfahren werden können.

## Patentansprüche

1. Mobile Tankstelle für Kraftfahrzeuge mit wenigstens einer an einen Kraftstofftank angeschlossenen Zapfsäule (25) , einem Fahrbahnelement (14) und wenigstens einer in das Fahrbahnelement integrierten Auffangwanne (15, 16) für verschütteten Kraftstoff oder kontaminierte Flüssigkeiten, **dadurch gekennzeichnet, dass** die mobile Tankstelle von wenigstens einem Container (1, 2) als raumbildendem Modul gebildet ist, der von dem zu betankenden Fahrzeug durchfahrbar ist, wobei der Boden (7) des Containers das Fahrbahnelement trägt oder aufweist und die Dachwand des Containers die Überdachung (8) der Tankstelle bildet und wobei die wenigstens eine Zapfsäule (25) in dem Container angeordnet ist.

2. Mobile Tankstelle nach Anspruch 1, **dadurch gekennzeichnet, dass** die Tankstelle aus wenigstens zwei, vorzugsweise drei Containern (1, 2) mit gleichen Außenabmessungen aufgebaut ist.

3. Mobile Tankstelle nach Anspruch 1 oder 2, **dadurch gekennzeichnet, dass** zwei Container (1, 2) mit ihren längeren Seiten aneinander gestellt sind und die Container quer zur längeren Seite hintereinander stufenlos durchfahrbar sind, sodass der eine Container die Tankstelleinfahrt und der andere Container die Tankstellenausfahrt aufweist.

4. Mobile Tankstelle nach Anspruch 1, 2 oder 3, **dadurch gekennzeichnet, dass** die Zapfsäule (25) im Wesentlichen in der Mitte der Längserstreckung des Containers (1, 2) angeordnet ist, sodass die Tankstelle zu beiden Seiten der Zapfsäule durchfahrbar ist.

5. Mobile Tankstelle nach einem der Ansprüche 1 bis 4, **dadurch gekennzeichnet, dass** der wenigstens eine Container (1, 2) als Standard-Container, wie z.B. ISO-Container, bevorzugt als 20', 30' oder 40' ISO-Container, ausgebildet ist.

6. Mobile Tankstelle nach einem der Ansprüche 1 bis 5, **dadurch gekennzeichnet, dass** wenigstens zwei Auffangwannen (15, 16) vorgesehen sind, die sich quer zur Befahrrichtung der Tankstelle über die gesamte Länge des Containers (1, 2) erstrecken, wobei die eine Auffangwanne der Tankstelleneinfahrt und die andere Auffangwanne der Tankstellenausfahrt benachbart angeordnet ist.

7. Mobile Tankstelle nach einem der Ansprüche 1 bis 6, **dadurch gekennzeichnet, dass** die wenigstens eine Zapfsäule (25) über wenigstens eine Kraftstoffzuleitung und ggf. eine Gasrückführungsleitung mit einem externen Kraftstofftank verbunden ist.

8. Mobile Tankstelle nach einem der Ansprüche 1 bis 7, **dadurch gekennzeichnet, dass** der Kraftstofftank in einem gesonderten Container angeordnet ist.

9. Mobile Tankstelle nach Anspruch 7 oder nach Ansprüchen 7 und 8, **dadurch gekennzeichnet, dass** sich die wenigstens eine Kraftstoffzuleitung und ggf. die Gasrückführungsleitung über die gesamte Länge des Containers erstrecken und an zwei gegenüberliegenden Wänden des Containers Anschlussflansche aufweisen.

10. Mobile Tankstelle nach Anspruch 7, 8 oder 9, **dadurch gekennzeichnet, dass** die wenigstens eine Kraftstoffzuleitung und ggf. die Gasrückführungsleitung in der wenigstens einen Auffangwanne verläuft.

11. Mobile Tankstelle nach einem der Ansprüche 1 bis 10, **dadurch gekennzeichnet, dass** die Fahrbahnoberfläche des Fahrbahnelements in Richtung zur Auffangwanne abwärts geneigt ist.

12. Mobile Tankstelle nach einem der Ansprüche 1 bis 11, **dadurch gekennzeichnet, dass** in dem wenigstens einen Container (1, 2) ein Lagerbehälter (17) für in der wenigstens einen Auffangwanne gesammelten verschütteten Kraftstoff oder kontaminierte Flüssigkeiten angeordnet ist und dass eine Pumpe (8) zum Absaugen des gesammelten verschütteten Kraftstoffs oder der kontaminierten Flüssigkeiten aus der wenigstens einen Auffangwanne (15, 16) in den Lagerbehälter vorgesehen ist.

## Claims

1. A mobile filling station for motor vehicles, including at least one fuel dispenser (25) connected to a petrol tank, a lane element (14), and at least one collecting tub (15, 16) integrated in the lane element and provided for spilled fuel or contaminated fluids, **characterized in that** the mobile filling station is comprised of at least one container (1, 2) as a space-forming module, through which the vehicle to be filled can travel, wherein the bottom (7) of the container supports or comprises the lane element and the top wall of the container forms the roof (8) of the filling station, and wherein the at least one fuel dispenser (25) is arranged within the container.

2. A mobile filling station according to claim 1, **characterized in that** the filling station is composed of at least two, preferably three, containers (1, 2) having identical external dimensions.

3. A mobile filling station according to claim 1 or 2, **characterized in that** two containers (1, 2) are placed with their longer sides one against the other, and the containers can be steplessly travelled through one after the other transversely to said longer sides such that one of the containers comprises the filling station entry and the other of the containers comprises the filling station exit.

4. A mobile filling station according to claim 1, 2 or 3 **characterized in that** the fuel dispenser (25) is substantially arranged in the middle of the longitudinal extension of the container (1, 2) such that travelling through the filling station is possible on both sides of the fuel dispenser.

5. A mobile filling station according to any one of claims 1 to 4, **characterized in that** the at least one container (1, 2) is constructed as a standard container, e.g. an ISO container, preferably a 20', 30' or 40' ISO container.

6. A mobile filling station according to any one of claims 1 to 5, **characterized in that** at least two collecting tubs (15, 16) extending transversely to the travelling direction of the filling station over the entire length of the container (1, 2) are provided, one of the collecting tubs being arranged adjacent the filling station entry and the other of the collecting tubs being arranged adjacent the filling station exit.

7. A mobile filling station according to any one of claims 1 to 6, **characterized in that** the at least one fuel dispenser (25) is connected to an external fuel tank via at least one fuel supply line, and optionally a gas recovery line.

8. A mobile filling station according to any ane of claims 1 to 7, **characterized in that** the fuel tank is arranged in a separate container.

9. A mobile filling station according to claim 7 or according to claims 7 and 8, **characterized in that** the at least one fuel supply line, and optionally the gas recovery line, extend over the entire length of the container and comprise connecting flanges on two opposite walls of the container.

10. A mobile filling station according to claim 7, 8 or 9, **characterized in that** the at least one fuel supply line, and optionally the gas recovery line extend in the at least one collecting tub.

11. A mobile filling station according to any one of claims 1 to 10, **characterized in that** the lane surface of the lane element is downwardly inclined in the direction to the collecting tub.

12. A mobile filling station according to any one of claims 1 to 11, **characterized in that** a storage tank (17) for spilled fuel or contaminated fluids collected in the at least one collecting tub is arranged in the at least one container, and that a pump (8) for sucking off the collected spilled fuel or the contaminated fluids from the at least one collecting tub (15, 16) into the storage tank is provided.

## Revendications

1. Station-service mobile pour véhicules à moteur, comportant au moins une pompe (25), raccordée à une cuve à carburant, un élément de piste (14), et au moins une cuve de récupération (15, 16), intégrée dans l'élément de piste, pour le carburant répandu ou des liquides contaminés, **caractérisée en ce que** la station-service mobile est formée d'au moins un conteneur (1, 2), sous forme d'un module délimitant un espace, qui peut être traversé par le véhicule à approvisionner, le fond (7) du conteneur portant ou présentant l'élément de piste, et la paroi supérieure du conteneur formant le toit (8) de la station-service, et la ou les pompes (25) étant disposées dans le conteneur.

2. Station-service mobile selon la revendication 1, **caractérisée en ce que** la station-service est constituée d'au moins deux, de préférence trois conteneurs (1, 2) ayant les mêmes dimensions extérieures.

3. Station-service mobile selon la revendication 1 ou 2, **caractérisée en ce que** deux conteneurs (1,2) sont disposés l'un contre l'autre par leurs grands côtés, et les conteneurs peuvent être traversés en continu l'un derrière l'autre perpendiculairement au grand côté, de telle sorte que l'un des conteneurs comporte l'entrée de la station-service et l'autre conteneur la sortie de la station-service.

4. Station-service mobile selon la revendication 1, 2 ou 3, **caractérisée en ce que** la pompe (25) est pour l'essentiel disposée au milieu de l'extension longitudinale du conteneur (1, 2), de telle sorte que la station-service puisse être traversée des deux côtés de la pompe.

5. Station-service mobile selon l'une des revendications 1 à 4, **caractérisée en ce que** le ou les conteneurs (1, 2) sont configurés comme des conteneurs standard, tels que par exemple le conteneur ISO, de préférence sous forme d'un conteneur ISO de 20', 30' ou 40'.

6. Station-service mobile selon l'une des revendications 1 à 5, **caractérisée en ce qu'**au moins deux cuves de récupération (15, 16) sont prévues, qui s'étendent perpendiculairement à la direction de passage des véhicules dans la station-service sur toute la longueur du conteneur (1, 2), une cuve de récupération de l'entrée de la station-service et l'autre cuve de récupération de la sortie de la station-service étant disposées l'une à côté de l'autre.

7. Station-service mobile selon l'une des revendications 1 à 6, **caractérisée en ce que** la ou les pompes (25) sont, par l'intermédiaire d'au moins une conduite d'amenée de carburant et éventuellement d'une conduite de récupération des gaz, reliées à une cuve de carburant externe.

8. Station-service mobile selon l'une des revendications 1 à 7, **caractérisée en ce que** la cuve de carburant est disposée dans un conteneur distinct.

9. Station-service mobile selon la revendication 7 ou les revendications 7 et 8, **caractérisée en ce que** la ou les conduites d'amenée de carburant et éventuellement la conduite de récupération des gaz s'étendent sur toute la longueur du conteneur, et comprennent des brides de raccordement sur deux parois opposées du conteneur.

10. Station-service mobile selon la revendication 7, 8 ou 9, **caractérisée en ce que** la ou les conduites d'amenée de carburant et éventuellement la conduite de récupération des gaz courent dans la ou les cuves de récupération.

11. Station-service mobile selon l'une des revendications 1 à 10, **caractérisée en ce que** la surface de l'élément de piste est inclinée vers le bas en direction de la cuve de récupération.

12. Station-service mobile selon l'une des revendications 1 à 11, **caractérisée en ce qu'**un réservoir de stockage (17) est prévu dans le ou les conteneurs (1, 2) pour le carburant répandu ou les liquides contaminés recueillis dans la ou les cuves de récupération, et qu'une pompe (8) permet d'aspirer dans le réservoir de stockage le carburant répandu ou les liquides contaminés recueillis dans la ou les cuves de récupération (15, 16).
